Europäisches Patentamt

European Patent Office

Office européen des brevets

(11) Numéro de publication: **0 278 844**
**A1**

(12) **DEMANDE DE BREVET EUROPEEN**

(21) Numéro de dépôt: **88400202.3**

(22) Date de dépôt: **29.01.88**

(51) Int. Cl.4: **H 02 G 15/064**
**H 02 G 15/105**

(30) Priorité: **02.02.87 FR 8701186**

(43) Date de publication de la demande:
**17.08.88 Bulletin 88/33**

(84) Etats contractants désignés: **DE ES GB IT**

(71) Demandeur: **TREFICABLE PIRELLI**
**1, rue des Usines**
**F-94410 Saint Maurice (FR)**

(72) Inventeur: **Tardif, Laurent Eric**
**83 avenue du Maine**
**F-75014 Paris (FR)**

(74) Mandataire: **Lepeudry-Gautherat, Thérèse et al**
**CABINET LEPEUDRY 6 rue du Faubourg St-Honoré**
**F-75008 Paris (FR)**

(54) **Câble électrique, notamment isolé au papier imprégné, à l'extrémité duquel est rapporté un dispositif de raccordement.**

(57) L'invention est relative à un câble électrique équipé d'un dispositif de raccordement (20) qui comprend un manchon (21) définissant un logement et présentant une couche intermédiaire (24) électriquement isolante interposée radialement entre deux couches respectivement intérieure (23) et extérieure (25), dont les caractéristiques électriques assurent le guidage du champ électrique, ledit logement étant délimité axialement par la couche intérieure (23) puis par les couches intermédiaire (24) et extérieure (25) qui affleurent, l'extrémité du câble (1) s'étendant dans le logement.

Selon l'invention, le câble comporte un tube (43) isolant monté avec serrage dans le logement de façon à être en contact avec la couche intermédiaire (24) et un espace ménagé à la périphérie du câble dans le logement est rempli d'une matière isolante (48).

Application à la distribution d'électricité en moyenne tension.

FIG.1

EP 0 278 844 A1

# Description

Câble électrique, notamment isolé au papier imprégné, à l'extrémité duquel est rapporté un dispositif de raccordement.

L'invention est relative à un câble électrique isolé comprenant une âme et équipé au moins à l'une de ses extrémités d'un dispositif de raccordement qui comprend un manchon définissant un logement intérieur pourvu d'au moins une ouverture et présentant une couche intermédiaire électriquement isolante interposée radialement entre deux couches respectivement intérieure et extérieure, dont les caractéristiques électriques assurent le guidage du champ électrique prenant naissance au sein de la couche isolante lorsqu'une différence de potentiel s'établit entre ces deux couches, ledit logement étant délimité axialement, depuis une région la plus intérieure vers ladite ouverture, par la couche intérieure puis par les couches intermédiaire et extérieure qui affleurent, l'extrémité du câble s'étendant dans le logement par ladite ouverture, le dispositif de raccordement comprenant des moyens pour son raccordement mécanique à l'âme du câble.

L'invention concerne en particulier les câbles électriques de puissance, dans le domaine de la moyenne tension, c'est-à-dire celui couvrant l'ensemble des classes de tension comprises entre 12 et 36 KV.

Par "dispositif de raccordement", on entend non seulement les moyens pour raccorder les âmes conductrices des câbles, mais surtout les moyens pour reconstituer l'isolation des câbles.

Avec le développement des câbles secs, c'est-à-dire à isolation synthétique moulée, on a vu apparaître un certain nombre de dispositif sde raccordement moulés d'une seule pièce, qui peuvent être montés de façon très simple à l'extrémité d'un câble, par emmanchement. On peut citer les prises montées aux extrémités des câbles pour relier celles-ci de façon démontable à un appareil électrique, les manchons pour habiller une jonction entre deux extrémités de câbles, et les blocs d'extrémités de câbles permettant le montage d'une cosse aux extrémités des câbles.

L'emmanchement de tels dispositifs de raccordement sur l'extrémité d'un câble à isolation synthétique est aisée puisque cette isolation est constituée d'une matière sensiblement rigide qui ne risque pas d'être endommagée durant cette opération. En revanche, l'opération d'emmanchement ne peut pas être envisagée pour des câbles à isolation rubanée, tels que des câbles isolés au papier imprégné, car elle provoquerait une déchirure de l'isolation.

Or l'emploi de dispositifs de raccordement moulés pour des câbles à isolation rubanée est recherché puisque ces dispositifs assurent un isolement complet du raccordement et présentent une fiabilité bien supérieure à celle offerte par les raccordements réalisés par enrubannage. Et il existe par ailleurs encore aujourd'hui un grand nombre de réseaux de distribution d'énergie électrique équipés de câbles à isolation rubanée.

Le but de l'invention est donc de proposer des moyens pour monter un dispositif de raccordement du type précisé au début de l'exposé, à l'extrémité d'un câble, en particulier d'un câble à isolation rubanée sans risquer d'endommager cette isolation.

Par ailleurs, dans un tel dispositif de raccordement, une différence de potentiel importante s'établit, en service, entre la couche intérieure et la surface de la couche extérieure affleurant dans le logement. Des moyens doivent être donc prévus pour contrôler la ligne de fuite qui s'étend axialement entre ces deux couches, dans le logement.

Selon l'invention, lesdits moyens pour monter un dispositif de raccordement à l'extrémité d'un câble comprennent un tube électriquement isolant monté dans le logement de façon à être en contact avec au moins toute la surface affleurante de la couche intermédiaire et de façon qu'une pression mécanique de serrage s'établisse entre le tube et la couche intermédiaire, un espace étant ménagé à la périphérie du câble dans le logement, et une matière électriquement isolante remplissant ledit espace.

Avantageusement, les moyens selon l'invention comprennent des moyens pour le centrage du câble à l'intérieur du logement.

Selon une forme de réalisation préférée lesdits moyens de centrage comprennent un fourreau élastique présentant une surface intérieure cylindrique destinée à recevoir le câble, et une surface extérieure conique destinée à coopérer avec l'ouverture du logement, ainsi qu'une fente s'étendant sur toute la longueur du fourreau et sur toute son épaisseur.

Avantageusement, l'espace susdit est délimité dans la direction longitudinale du câble d'une part par ledit fourreau et d'autre part par des moyens d'étanchéité portés par le câble et agencés pour coopérer de façon étanche avec la paroi délimitant ledit logement.

Selon une forme de réalisation préférée, lesdits moyens d'étanchéité comprennent une rondelle élastique de dimensions supérieures à celles de l'ouverture du logement, qui est solidaire du câble.

Avantageusement, ladite matière de remplissage est une résine polymérisable à froid.

De préférence la matière de remplissage et les matériaux constituant respectivement le tube, les moyens de centrage du câble et les moyens d'étanchéité, sont choisis de telle sorte que la matière de remplissage adhère sur chacun de ces matériaux ainsi que sur le câble.

D'autres détails et avantages de l'invention apparaîtront au cours de la description suivante, d'une forme préférée de réalisation donnée à titre d'exemple non limitatif, en regard des dessins annexés sur lesquels :

La figure 1 est une vue en coupe longitudinale d'une extrémité de câble électrique équipé selon l'invention.

La figure 2 est une vue en coupe transversale, selon la ligne II-II de la figure 1.

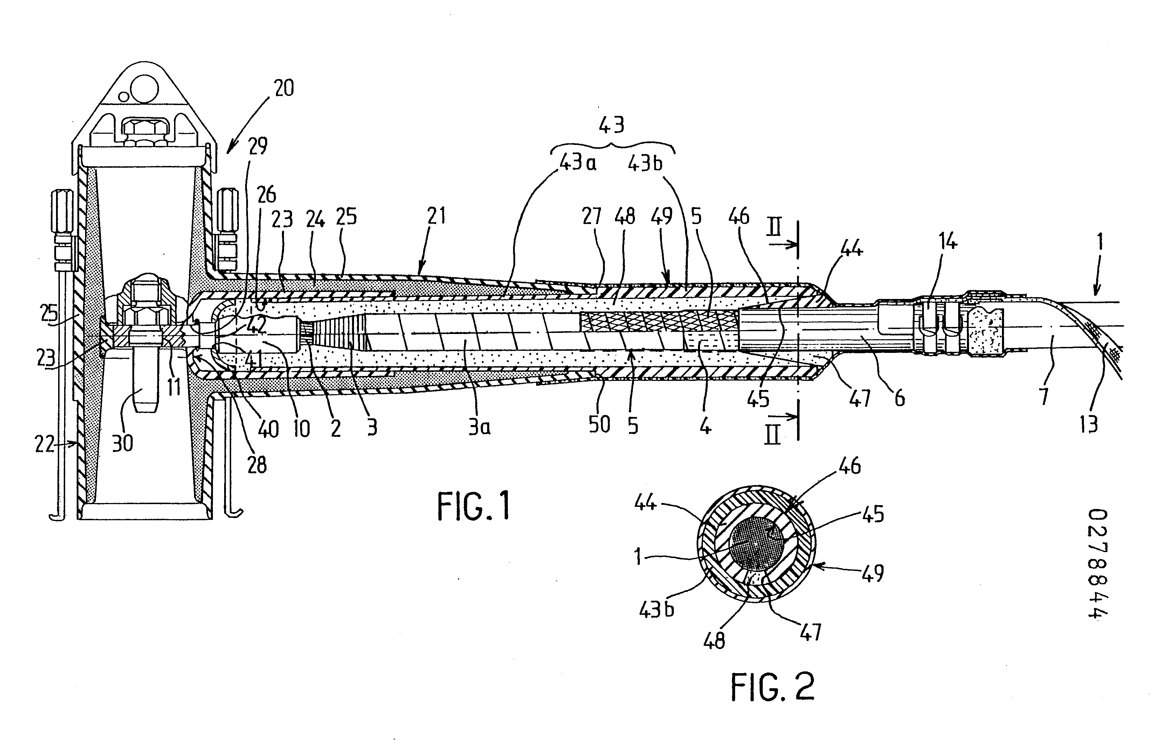

Sur la figure 1 est représenté un câble électrique unipolaire 1 du type isolé au papier imprégné comprenant de façon connue en soi une âme métallique 2 intérieure, recouverte successivement par une pluralité de couches superposées : plusieurs couches rubanées 3 de papier imprégné constituant l'isolation principale de l'âme 2 et dont on aperçoit en 3a la couche la plus extérieure, une couche rubanée 4 de papier métallisé, une gaine d'étanchéité en plomb 6 et une gaine la plus extérieure 7 en polychlorure de vinyle.

Un tel câble est utilisé dans le domaine des moyennes tensions défini précédemment.

En vue d'effectuer le raccordement de l'extrémité du câble 1, celui-ci a été dénudé de manière que les couches de recouvrement précitées s'arrêtent à une distance déterminée du bout du câble. Une cosse de raccordement 10 tubulaire a été fixée par sertissage sur l'âme 2 du câble: cette cosse comprend de façon connue en soi un prolongement massif dans lequel est pratiqué un trou taraudé 11.

Dans cet exemple une couche 5 de papier à haute permittivité diélectrique destiné à répartir localement le champ électrique, a été rubanée de façon à chevaucher une zone terminale de la couche 4 de papier métallisé et une partie de la couche la plus extérieure 3a de papier imprégné.Puis une tresse métallique 13 de mise à la terre a été fixée par une extrémité sur la gaine en plomb 6, comme représenté en 14.

Dans cet exemple, le câble électrique 1 est destiné a être raccordé à une prise unipolaire monobloc et moulée 20 permettant de fixer de façon démontable l'extrémité du câble sur un appareil électrique, tel qu'un transformateur.

Cette prise est connue en soi et ordinairement destinée à être emmanchée sur l'extrémité d'un câble sec, c'est-à-dire d'un câble à isolation synthétique. Il s'agit d'une prise mâle en forme de T comprenant notamment un manchon sensiblement circulaire 21 destiné à recevoir l'extrémité du câble, et un autre manchon sensiblement circulaire 22 destiné à recevoir une prise femelle.

Le manchon 21 présente notamment une paroi intérieure cylindrique circulaire 26 se terminant par une ouverture circulaire 27 à son extrémité libre, et par un fond 28 à sa seconde extrémité reliée à l'autre manchon 22. Le fond 28 comporte une ouverture 29 de diamètre inférieur au diamètre intérieur du manchon 21, qui débouche dans l'autre manchon 22.

La prise 20 est essentiellement formée de trois couches en élastomère superposées : une couche intérieure 23 conductrice, une couche intermédiaire 24 isolante et une couche extérieure 25 conductrice. La paroi 26 du manchon 21 est définie dans la région du fond 28 par la couche intérieure 23, dans la région de l'ouverture 27 par la couche extérieure 25 qui affleure, et entre ces deux régions par la couche intermédiaire 24 qui affleure.

Sur la figure 1, l'extrémité du câble 1 traverse coaxialement le manchon 21 de la prise, et la cosse de raccordement 10 traverse le fond 28 de ce manchon, par l'ouverture 29 dont le diamètre correspond à celui de la cosse, de façon que le trou taraudé 11 de la cosse 10 soit centré sur l'axe du manchon 22.

Un plot de contact électrique 30 est vissé dans le trou taraudé 11, immobilisant axialement le câble par rapport à la prise 20.

Une rondelle d'étanchéité circulaire élastique 40, de préférence en élastomère, présente un orifice central 41 au moyen duquel elle est traversée par la cosse de raccordement 10. Cette rondelle 40 fait face au fond 28 du manchon 21 et prend appui sur un épaulement 42 de la cosse de raccordement 10, sur sa face la plus éloignée du fond 28. Elle possède un diamètre extérieur supérieur au diamètre intérieur du manchon 21, de sorte qu'elle présente une courbure tournée vers l'ouverture 27 de celui-ci.

Un tube électriquement isolant 43, de préférence en polychlorure de vinyle, est emmanché à force dans le manchon 21.

Ce tube est de section circulaire et présente une portion la plus longue 43a de longueur presque égale à celle du manchon 21 de la prise 20, prolongée par une portion 43b de longueur plus faible et d'épaisseur plus importante. Un épaulement 50 relie donc les portions 43a et 43b, qui prend appui sur l'ouverture 27 du manchon 21.

Le tube 43 s'étend dans le manchon 21 de façon à être en contact d'une part avec une partie importante de la couche intérieure 23, d'autre part avec toute la surface affleurante de la couche intermédiaire 24, et enfin avec toute la surface affleurante de la couche extérieure 25. Une pression, résultant ici de l'élasticité propre du manchon 21, assure le serrage de la paroi 26 du logement contre le tube 43.

Le tube 43 s'étend à l'extérieur du manchon 21 de façon que son extrémité soit située axialement entre l'extrémité de la gaine en plomb 6 et celle de la gaine extérieure 7.

Une pièce de centrage 44 en forme de fourreau présente une surface intérieure cylindrique et sensiblement circulaire 45 et une surface extérieure conique 46 coaxiale à la précédente. Cette pièce de centrage présente une fente 47 s'étendant sur toute sa longueur et sur toute son épaisseur. Elle est constituée d'une matière élastomère, de préférence d'un polymère éthylène-propylène réticulé, rendu conducteur de l'électricité par addition de charges. Cette pièce de centrage 44 est montée sur la gaine en plomb 6 du câble 1 et elle s'appuie sur le bord adjacent du tube 43 par sa surface conique 46.

En raison de son éleasticité et de la présence de sa fente 47, la pièce de centrage 44 peut être avantageusement montée sur des câbles de diamètres différents. Dans le cas d'un câble de diamètre inférieur au diamètre intérieur de la pièce de centrage, celle-ci sera resserrée contre le câble et pénétrera profondément à l'intérieur du tube 43 avant de buter sur celui-ci. Dans le cas, au contraire, d'un câble de diamètre supérieur au diamètre intérieur de la pièce de centrage, celle-ci sera écartée pour pouvoir être montée sur le câble et par conséquent elle s'enfoncera peu profondément à l'intérieur du tube 43.

Une matière de remplissage 48 isolante et polymérisable à froid, notamment une résine polyuréthanne, remplit tout l'espace compris radialement entre le manchon 21 ou le tube 43 et le câble 1, et compris axialement entre la rondelle d'étanchéité 40 et la pièce de centrage 44. La matière de remplissage remplit éventuellement la fente 47 de la pièce de centrage 44.

La nature chimique de la matière de remplissage 48 doit être soigneusement choisie de façon que celle-ci adhère intimement à chacune des pièces ou couches avec lesquelles elle est en contact, c'est-à-dire notamment au tube 43, à la rondelle d'étanchéité 40, à la pièce de centrage 44 et aux différentes couches de papier 3, 4, 5 du câble 1, et aussi au produit d'imprégnation du papier 3. Naturellement, ces différentes pièces doivent être elles aussi en un matériau favorisant cette adhérence.

Enfin, une gaine tubulaire thermorétractable rendue conductrice 49 recouvre l'extrémité libre du manchon 21, une partie du tube 43, de la pièce de centrage 44 et de la gaine en plomb 6 du câble 1, et les moyens 14 de fixation de la tresse métallique 13 sur le câble 1. Cette gaine thermorétractable 49 assure donc la continuité électrique entre la couche semiconductrice extérieure 25 de la prise 20 et la gaine en plomb 6 du câble 1, d'une part par l'intermédiaire de la pièce de centrage 44 conductrice qui est en contact avec la gaine en plomb 6, et d'autre part par contact direct avec cette gaine.

Un procédé préféré de montage de la prise à l'extrémité du câble sur chantier est décrit ci-après. On dénude tout d'abord le câble de la façon décrite précédemment. On fixe par sertissage la cosse de raccordement 10 sur l'âme 2 du câble. On rapporte la couche de papier à haute permittivité et l'on fixe la tresse métallique 13 sur le câble. On enfile également sur le câble la gaine thermorétractable 49 à l'état non rétracté. Puis on enfile la rondelle d'étanchéité 40 sur la cosse de raccordement 10.

Quant à la prise 20, elle est équipé du tube 43 qui a été emmanché à force dans le manchon 21 par des moyens mécaniques, en usine.

On rentre alors l'extrémité du câble dans le manchon 21 et on la fixe au moyen du plot de contact électrique 30.

Puis on coule dans le tube 43 la matière de remplissage 48 à l'état pâteux. Pour faciliter cette opération, on peut disposer le manchon 21 de la prise verticalement, fond en bas, et pousser le câble radialement contre le tube 43 de façon à ménager un espace plus grand pour l'introduction de la matière de remplissage. On rapporte sur le câble la pièce de centrage 44, celle-ci étant ouverte et présentant une élasticité permettant ce montage, et on la fait glisser le long du câble de façon qu'elle vienne en butée contre le tube 43.

L'excès éventuel de matière de remplissage est retiré. On positionne alors précisément la gaine thermorétractable 49 sur l'extrémité du câble et on la chauffe pour provoquer sa rétraction.

La polymérisation de la matière de remplissage 48 s'effectue à froid, et est terminée au bout d'une trentaine de minutes. La matière est alors dure. La prise 20 peut maintenant être montée sur un appareil électrique et l'ensemble peut être mis sous tension.

Selon l'invention, on réalise donc le montage d'une prise monobloc moulée à l'extrémité d'un câble isolé au papier imprégné sans risquer d'abîmer les couches en papier du câble, puisqu'aucune pièce d'adaptation de diamètre, telle qu'un manchon en élastomère, n'est glissée sur ces couches.

Par ailleurs une liaison intime est réalisée entre la surface extérieure du tube 43 et la surface affleurante de la couche isolante 24 de la prise 20, dont la qualité résulte de la pression mécanique mise en jeu, et qui garantit un bon isolement le long du chemin s'étendant axialement entre les couches intérieure 23 et extérieure 25 de la prise 20. La compression de la couche isolante au voisinage du tube tend également à supprimer toute présence d'air au sein de la couche.

En l'absence de ce tube 43 et de ce serrage, une simple adhérence de la matière de remplissage 48 sur la paroi 26 du logement ne pourrait garantir le même isolement. En effet, l'adhérence ne supprimerait pas nécessairement toute présence d'air à l'interface entre la paroi 26 et la matière de remplissage 48. Par ailleurs, la qualité de l'adhérence tendrait à décroître dans le temps, en raison notamment de la différence entre les coefficients de dilatation thermique de la matière constituant la prise et de la matière de remplissage.

Comme dans l'exemple décrit, le tube 43 est de préférence en contact avec une partie importante de la couche intérieure 23 de la prise 20 de façon que l'extrémité correspondante du tube soit éloignée de la couche isolante 24. Ainsi, les défauts d'adhérence qui peuvent survenir entre cette extrémité du tube 43 et la couche intérieure 23 ne risquent pas de compromettre l'isolement au voisinage de la couche isolante 24. Si l'on envisage un tube 43 plus court et dont l'extrémité intérieure à la prise 20 serait voisine de la couche isolante 24, du fait que la couche intérieure 23 est plus résistante que la couche isolante 24, il peut se produire un effet de "poutre" : l'extrémité du tube 43 tend à écarter radialement vers l'extérieur la couche intérieure 23, et donc à créer un espace entre celles-ci.

On notera également que le tube 43 permet de prolonger le manchon 21 de la prise 20 de façon rigide, pour s'adapter aux importantes longueurs de dénudage des couches d'un câble isolé au papier imprégné, ces longueurs étant nécessaires pour assurer le long du câble un isolement satisfaisant entre couches et une bonne répartition du champ électrique.

Comme décrit précédemment, la portion 43b du tube 43 située à l'extérieur de la prise 20 est d'épaisseur plus importante que celle 43a située à l'intérieur. Ainsi cette portion 43b est suffisamment résistante pour ne pas s'affaisser lorsque l'on chauffe la gaine thermorétractable 49 qui l'entoure.

Par ailleurs, la rondelle d'étanchéité 40 permet avantageusement de contenir la matière de remplissage 48 lors de son introduction, étant donné que la prise 20 n'est pas conçue pour assurer une telle étanchéité.

Avantageusement, la pièce de centrage 44 peut être montée après l'opération de remplissage du tube 43 de sorte que l'introduction de la matière de remplissage 48 n'est pas gênée par cette pièce. En outre, cette pièce de centrage 44 s'adapte à plusieurs diamètres de câble et remplace donc à elle seule une pluralité de pièces d'adaptation.

**Revendications**

1.- Câble électrique isolé comprenant une âme (2) et équipé au moins à l'une de ses extrémités d'un dispositif de raccordement (20) qui comprend un manchon (21) définissant un logement intérieur pourvu d'au moins une ouverture (27) et présentant une couche intermédiaire (24) électriquement isolante interposée radialement entre deux couches respectivement intérieure (23) et extérieure (25), dont les caractéristiques électriques assurent le guidage du champ électrique prenant naissance au sein de la couche isolante lorsqu'une différence de potentiel s'établit entre ces deux couches, ledit logement étant délimité axialement, depuis une région la plus intérieure vers ladite ouverture (27), par la couche intérieure (23) puis par les couches intermédiaire (24) et extérieure (25) qui affleurent, l'extrémité du câble (1) s'étendant dans le logement par ladite ouverture, le dispositif de raccordement comprenant des moyens (10) pour son raccordement mécanique à l'âme du câble, câble caractérisé en ce qu'il comporte un tube (43) électriquement isolant monté dans le logement de façon à être en contact avec au moins toute la surface affleurante de la couche intermédiaire (24) et de façon qu'une pression mécanique de serrage s'établisse entre le tube et la couche intermédiaire, en ce qu'un espace est ménagé à la périphérie du câble dans le logement, et en ce qu'une matière électriquement isolante (48) remplit ledit espace.

2.- Câble selon la revendication 1, qui comprend des moyens (44) pour son centrage à l'intérieur du logement.

3.- Câble selon la revendication 2, dans lequel lesdits moyens de centrage comprennent un fourreau élastique (44) présentant une surface intérieure cylindrique (45) destinée à recevoir le câble (1), et une surface extérieure conique (46) destinée à coopérer avec l'ouverture du logement, ainsi qu'une fente (47) s'étendant sur toute la longueur du fourreau et sur toute son épaisseur.

4.- Câble selon la revendication 3, dans lequel l'espace susdit est délimité dans la direction longitudinale du câble d'une part par ledit fourreau (44) et d'autre part par des moyens d'étanchéité (40) portés par le câble et agencés pour coopérer de façon étanche avec la paroi (26) délimitant ledit logement.

5.- Câble selon la revendication 4, dans lequel lesdits moyens d'étanchéité comprennent une rondelle élastique (40) de dimensions supérieures à celles de l'ouverture (27) du logement, qui est solidaire du cable.

6.- Câble selon la revendication 1, dans lequel ladite matière de remplissage (48) est une résine polymérisable à froid.

7.- Câble selon la revendication 4, dans lequel la matière de remplissage (48) et les matériaux constituant respectivement le tube (43), les moyens de centrage (44) du câble et les moyens d'étanchéité (10), sont choisis de telle sorte que la matière de remplissage adhère sur chacun de ces matériaux ainsi que sur le câble.

FIG.1

FIG. 2

02788844

**Office européen des brevets**

# RAPPORT DE RECHERCHE EUROPEENNE

Numero de la demande

EP 88 40 0202

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 201 565 (G. & W. ELECTRIC SPECIALITY) <br> * Figure 19 * <br> --- | 1 | H 02 G 15/064 <br> H 02 G 15/105 |
| A | DE-A-3 233 572 (FELTEN & GUILLEAUME) <br> * Page 1, résumé; figure * <br> --- | 1 | |
| A | US-A-2 523 313 (INTERNATIONAL STANDARD ELECTRIC) <br> * Colonne 4, lignes 34-46; figures 1,2 * <br> ----- | 1 | |

|  | DOMAINES TECHNIQUES RECHERCHES (Int. Cl.4) |
|---|---|
|  | H 02 G <br> H 01 R |

Le présent rapport a été établi pour toutes les revendications

| Lieu de la recherche | Date d'achèvement de la recherche | Examinateur |
|---|---|---|
| LA HAYE | 02-05-1988 | LOMMEL A. |